# EUROPÄISCHE PATENTSCHRIFT

(11) **EP 0 478 642 B1**
(45) Veröffentlichungstag und Bekanntmachung des Hinweises auf die Patenterteilung: **08.12.1993**
(21) Anmeldenummer: 90909672.9
(22) Anmeldetag: 13.06.1990
(51) Int. Cl.: B60T 7/08, B60T 13/74

(54) **BETÄTIGUNGSEINRICHTUNG FÜR EINE KRAFTFAHRZEUG-FESTSTELLBREMSE**
ACTUATING DEVICE FOR THE PARKING BRAKE OF A MOTOR VEHICLE
DISPOSITIF D'ACTIONNEMENT DU FREIN DE STATIONNEMENT DE VEHICULES A MOTEUR

(30) Priorität: 20.06.1989 DE 3919994; 22.12.1989 DE 3942539
(43) Veröffentlichungstag der Anmeldung: 08.04.1992
(73) Patentinhaber: Volkswagen Aktiengesellschaft, 38436 Wolfsburg (DE)
(72) Erfinder: WEISSBRICH, Alfons, D-3300 Braunschweig (DE); RUHR, Simone, D-3300 Braunschweig (DE)
(86) Internationale Anmeldenummer: EP9000930
(87) Internationale Veröffentlichungsnummer: WO9015734

(56) Entgegenhaltungen:
- DE-A- 2 035 349
- DE-A- 2 815 018
- DE-A- 3 238 196
- US-A- 4 629 043

## Beschreibung

Die Erfindung betrifft eine Betätigungseinrichtung für eine Kraftfahrzeug-Feststellbremse der im Oberbegriff des Patentanspruchs 1 genannten Art.

Eine Feststellbremse dieser Art ist aus der DE-OS 20 35 349 prinzipienhaft bekannt. Diese bekannte Feststellbremse soll bei allen Betriebszuständen des Fahrzeugs, wie z. B. beim Anlassen, Anfahren, Gangschalten, Kuppeln, kurz Anhalten und Dauerparken automatisch angezogen und gelöst werden können. Konkrete Konstruktions- und Steuermerkmale sind in dieser Schrift jedoch nicht offenbart. Es ist lediglich sinngemäß schematisch dargestellt, daß im Zuge der elektrischen Speiseleitung des Elektromotors mehrere elektrische Schalter angeordnet werden sollen, die der Zündschaltung, der Kupplung sowie der Gangschaltung des Kraftfahrzeuges zugeordnet sind und deren Schaltzustände vom jeweiligen Funktionszustand Zündung ein / Zündung aus, Kupplung eingerückt / Kupplung ausgerückt sowie Gang eingelegt / Leerlauf abhängig sind. Durch einen offensichtlich manuell betätigbaren weiteren elektrischen Schalter können dabei die vorerwähnten elektrischen Schalter außer Funktion gesetzt und der Elektromotor unmittelbar gesteuert werden.

Der Erfindung liegt demzufolge die Aufgabe zugrunde, eine Betätigungseinrichtung der im Oberbegriff des Patentanspruchs 1 genannten Art zu schaffen, welche bezüglich ihres konstruktiven Aufbaus, ihrer Funktionsweise und ihrer Betriebszuverlässigkeit den Bedürfnissen der Praxis gerecht wird und darüber hinaus vielfältige weitere Möglichkeiten zur Steuerung und Funktionsüberwachung der Feststellbremse eröffnet.

Diese Aufgabe wird erfindungsgemäß durch die Merkmale des Patentanspruchs 1 gelöst.

Vorteilhafte und erfindungswesentliche Ausgestaltungen und Weiterbildungen der Erfindung sind in den Unteransprüchen angegeben.

Anhand eines in der Zeichnung dargestellten Ausführungsbeispiels wird die Erfindung nachstehend näher erläutert.

In der Zeichnung zeigen in zum Teil prinzipienhafter und schematischer Darstellung
- Fig. 1: die Ansicht einer Betätigungseinrichtung gemäß der Erfindung und
- Fig. 2: ein Detail dieser Betätigungseinrichtung.

Die Zeichnung zeigt lediglich die für das Verständnis der Erfindung notwendigen Einzelheiten der Betätigungseinrichtung.

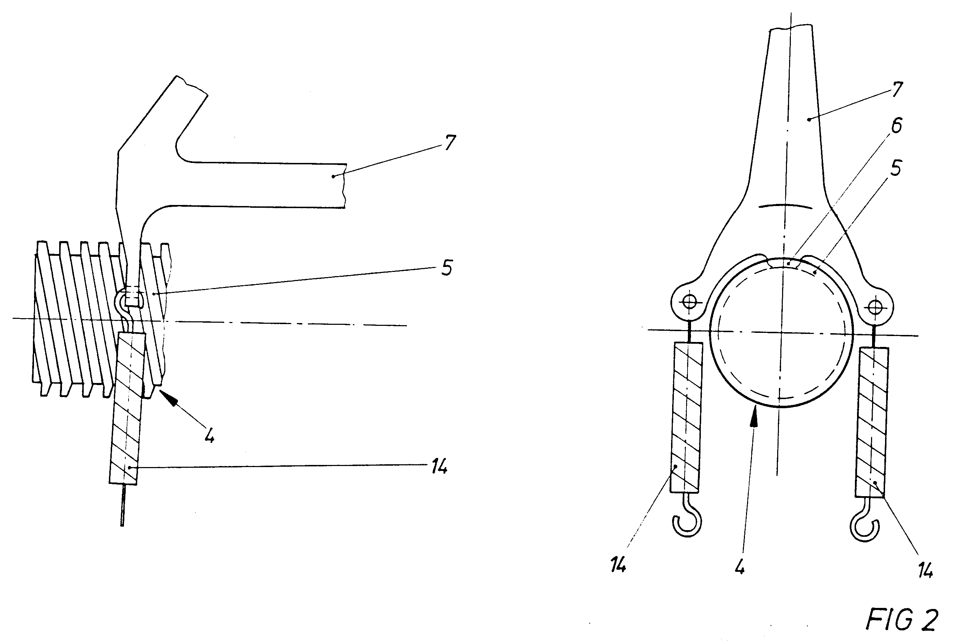

Bei der beispielhaft dargestellten Betätigungseinrichtung handelt es sich um eine Anordnung, die nach Wahl rein mechanisch nach Art bekannter Handbremsbetätigungen oder aber rein elektrisch betrieben werden kann, ohne daß hierbei irgendwelche Umschaltmaßnahmen o. ä. vorgenommen werden müssen. Die Anordnung enthält einen Elektromotor 1, der unter Zwischenschaltung eines Getriebes 3 eine Gewindespindel 4 antreibt, deren Steilgewinde 5 vorzugsweise sägezahnförmig ausgebildet ist.
In das Steilgewinde 5 greift die Sperrklinke 6 eines durch Federvorrichtungen 13 in Richtung Gewindespindel 4 kraftbeaufschlagten Klinkenhebels 7 ein, wie in Fig. 2 gut zu erkennen ist. Der Klinkenhebel 7 seinerseits ist gelenkig am motorseitigen Ende des mit den Spannorganen der nicht weiter dargestellten Kfz.-Feststellbremse in Verbindung stehenden Kraftübertragungsgliedes 2 verbunden. Als Kraftübertragungsglied wird dabei vorzugsweise, wie auch im dargestellten Ausführungsbeispiel, ein Seilzug nach Art eines Bowdenzuges eingesetzt, dessen Seil 21 mit dem Klinkenhebel 7 verbunden ist, während sich dessen Bowdenzughülle 22 in üblicher Weise raumfest am nicht weiter dargestellten Fahrzeugaufbau abstützt.

Als Elektromotor 1 wird üblicherweise ein bekannter Gleichstrommotor eingesetzt, der aus einer an Bord befindlichen Batterie gespeist wird und mittels eines nicht weiter dargestellten elektrischen Schalters und/oder einer elektronischen Steuer- und Regeleinrichtung den jeweiligen Bedürfnissen entsprechend ein- und ausgeschaltet sowie in seiner Laufrichtung umgeschaltet werden kann. Vorzugsweise wird hierzu ein elektrischer Wechseltaster eingesetzt.

Zum elektrischen Anziehen sowie zum elektrischen Lösen der Feststellbremse wird der Elektromotor 1 jeweils durch Betätigung des Wechseltasters eingeschaltet, wobei die Laufrichtung des Elektromotors und damit die Drehrichtung der Gewindespindel 4 von der Richtung der Tasterbetätigung abhängt. Je nach Drehrichtung der Gewindespindel 4 wird daher der mit seiner Sperrklinke 6 in das Steilgewinde der Gewindespindel eingreifende Klinkenhebel 7 mit dem daran angreifenden Seil 21 des Kraftübertragungsgliedes 2 axial entweder in die eine oder in die andere Richtung bewegt Zum Betätigen der Feststellbremse wird der Wechseltaster so getätigt, daß der Klinkenhebel 7 aus seiner voll ausgezogen dargestellten Ruheposition "a" in Pfeilrichtung x z. B. in die Position "b" bewegt wird, wodurch vom Seil 21 des Kraftübertragungsgliedes 2 auf die Spannorgane der Feststellbremse eine die Spannorgane anziehende Zugkraft übertragen wird.

Sobald die Feststellbremse angezogen ist bzw. eine gewünschte Feststellkraft erreicht ist, wird der Elektromotor 1 entweder durch manuelle Betätigung eines entsprechenden elektrischen Schalters, z. B. durch Loslassen des vorerwähnten Wechseltasters, oder aber selbsttätig durch eine nicht weiter dargestellte elektronische Steuer- und Regeleinrichtung ausgeschaltet. Die Feststellkraft der Feststellbremse bleibt dabei trotz ausgeschalteten Elektromotors voll erhalten, wenn das Getriebe 3 und/oder das Steilgewinde 5 bzw. die Paarung Steilgewinde 5 / Sperrklinke 6 selbsthemmend bemessen sind; irgendwelche Haltekräfte sind durch den Elektromotor 1 hierbei also nicht aufzubringen.

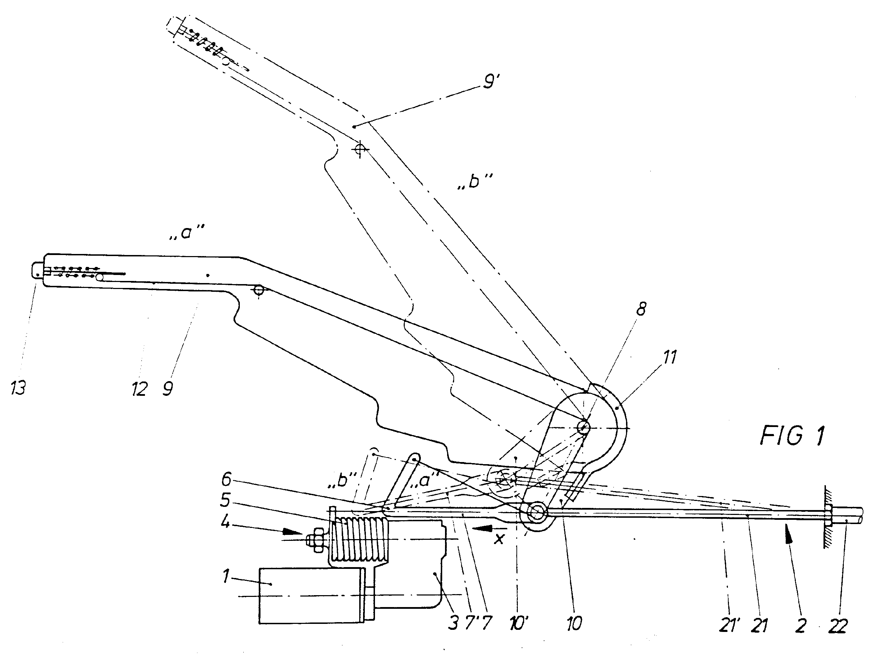

Zum elektrischen Lösen der angezogenen Feststellbremse wird der Elektromotor durch entsprechende Schalterbetätigung wieder eingeschaltet, jedoch mit entgegengesetzter Laufrichtung, so daß der Klinkenhebel 7 wieder zurückbewegt wird, maximal in die in Fig. 1 mit "a" bezeichnete Ruhelage. Das Kraftübertragungsglied 2 bzw. das Seil 21 wird nach Fortfall der vom Klinkenhebel 7 ausgeübten Zugkraft seinerseits durch die üblichen Rückzugfedern o.ä. der Feststellbremse ebenfalls in seine Ursprungsposition zurückgezogen.

Zum Ein- und Ausschalten sowie zur gleichzeitigen Bestimmung der für das Anziehen bzw. das Lösen der Festellbremse benötigten Laufrichtung des Elektromotors 1 wird vorzugsweise ein manuell betätigter elektrischer Wechseltaster vorgesehen, wie bereits erwähnt.

Außerdem kann jedoch auch noch eine elektronische Steuer- und Regeleinrichtung vorgesehen werden, um sowohl die einwandfreie Funktion der Anordnung zu überwachen als auch die Feststellbremse in Abhängigkeit von Betriebsparametern des Kraftfahrzeugs und/oder des Elektromotors 1 zu steuern.

In vorteilhafter Weise kann der Elektromotor 1 beispielsweise durch solche elektronische Steuer- und Regeleinrichtung selbsttätig ausgeschaltet werden, wenn sein Motorstrom einen vorbestimmten Wert übersteigt, oder aber wenn er sich eine bestimmte Zeit lang nicht mehr dreht. Hierzu müssen natürlich geeignete bekannte Sensoren zur Erfassung einerseits des Motorstroms und andererseits der Motorwellendrehzahl vorgesehen werden, deren Ausgangswerte der elektronischen Steuer- und Regeleinrichtung zugeführt werden. Durch Änderung dieses Motorstrom-Grenzwertes ist es dabei in einfacher Weise möglich, sich an die jeweils herrschenden besonderen Betriebsverhältnisse anzupassen. So ist es beispielsweise mit Hilfe eines im Fahrzeug eingebauten bekannten Neigungssensors o. ä. möglich, diesen Motorstrom-Grenzwert in Abhängigkeit von der Steigung bzw. vom Gefälle der Fahrbahn zu verändern, nämlich derart, daß der Grenzwert mit der Größe des Gefälles bzw. der Steigung der Fahrbahn entsprechend erhöht wird. Entsprechend dem erhöhten Motorstrom-Grenzwert wird der Elektromotor 1 dann erst bei einem höheren Motorstrom ausgeschaltet, also erst dann, wenn an der Feststellbremse eine entsprechend höhere Zuspannkraft zur Wirkung gebracht ist. Auch die Fahrzeugbelastung oder das Führen eines Kfz.-Anhängers kann durch Änderung des Motorstrom-Grenzwertes in einfacher Weise berücksichtigt werden.

Es ist leicht erkennbar, daß beim Anziehen der Feststellbremse, d. h. bei einem sich in Pfeilrichtung x bewegenden Klinkenhebel 7 Bremsbelagverschleiß oder Seillängenänderungen ohne Bremskrafteinbußen selbsttätig ausgeglichen werden.

Denkbar ist es auch, den Elektromotor 1 bei Erreichen der in Fig. 1 dargestellten Stellung "b" (angezogene Feststellbremse) oder des Anschlages in Stellung "a" (gelöste Bremse) einfach axialkraftabhängig auszuschalten.

Bei der erfindungsgemäßen Betätigungseinrichtung kann mit Hilfe der elektronischen Steuer- und Regeleinrichtung auch in sehr einfacher Weise kontinuierlich die Funktionstüchtigkeit der Anlage überwacht werden. Wenn der elektronischen Steuer- und Regeleinrichtung beispielsweise durch Strom- und Drehzahlsensoren signalisiert wird, daß einerseits ein zu hoher Motorstrom fließt und andererseits zuwenige Motorumdrehungen bzw. zuwenige Gewindespindelumdrehungen durchgeführt werden, dann wird die elektronische Steuer- und Regeleinrichtung mit Hilfe von in ihr enthaltenen Logikbausteinen, z. B. Mikroprozessoren o.ä., aus diesen Daten schlußfolgern, daß die Feststellbremse offensichtlich blockiert ist, beispielsweise durch Festrosten oder Festfrieren.
In entsprechender Weise wird die elektronische Steuer- und Regeleinrichtung in einfacher Weise dann, wenn einerseits der Motorstrom nicht mehr ansteigt und andererseits zuviele Motor- bzw. Spindelumdrehungen festgestellt werden, diagnostizieren, daß das Kraftübertragungsglied 2 gerissen ist oder aber, z. B. durch entsprechende Seillängung, zu lang geworden ist. Die erfindungsgemäße elektrisch betriebene Betätigungseinrichtung der Feststellbremse kann auch in vorteilhafter Weise mit einer üblichen Diebstahl-Warnanlage gekoppelt werden, z. B. in der Weise, daß die Feststellbremse nach Auslösen eines Alarms automatisch angezogen wird.

Mit Hilfe der elektronischen Steuer- und Regeleinrichtung ist auch möglich, eine Funktion "automatisches Betätigen der Feststellbremse bei einem Halt am Berg" oder eine Funktion "automatisches Betätigen der Festellbremse bei Fahrzeugstillstand" zu realisieren, wozu es im Prinzip lediglich erforderlich ist, mit Hilfe entsprechender Sensoreinrichtungen den Stillstand des Fahrzeuges und - im ersten Falle - die Fahrbahnneigung zu erfassen und diese Sensorsignale der elektronischen Steuer- und Regeleinrichtung zur Auswertung zuzuführen. Vor allem für Kraftfahrzeuge mit Automatikgetriebe ist ein solches selbsttätiges Anziehen der Feststellbremse bei eingelegter Fahrstufe, z. B. beim Ampelstop deutlich komfortsteigernd. Wenn diese Funktion der automatischen Betätigung der Feststellbremse nicht generell, sondern nur auf Wunsch des Fahrzeuglenkers wirksam sein soll, dann ist es in einfacher Weise möglich, diese Funktion über einen im zur Betätigung des Elektromotors 1 vorgesehenen elektrischen Wechseltaster integrierten Taster "Auto" zu aktivieren. Durch eine Leuchtdiode o. ä. kann dem Fahrzeuglenker diese Funktion dann angezeigt werden.

Mit Hilfe der elektronischen Steuer- und Regeleinrichtung ist es natürlich auch in einfacher Weise möglich, die elektrisch angezogene Feststellbremse wieder selbsttätig zu lösen, bei Kraftfahrzeugen mit Automatikgetriebe z. B. dann, wenn bei laufendem Fahrmotor eine Fahrstufe des Automatikgetriebes eingelegt ist und das Fahrpedal betätigt wird. Bei Kraftfahrzeugen mit manuell betätigbarem Schaltgetriebe kann das selbsttätige Lösen der elektrisch angezogenen Feststellbremse z. B. dann erfolgen, wenn bei laufendem Fahrmotor und eingelegtem Gang des Schaltgetriebes das Gaspedal betätigt und die Trennkupplung durch entsprechende Betätigung des Kupplungspedals um ein gewisses Maß eingerückt ist.

Bekanntlich führt ein Überbremsen der Hinterachse eines Kraftfahrzeugs grundsätzlich zu einem instabilen Fahrzustand. Mit Hilfe der elektronischen Steuer- und Regeleinrichtung ist es nun in einfacher Weise möglich, bei Überschreiten einer bestimmten Fahrgeschwindigkeitsschwelle, die z. B. bei etwa 20 km/h liegen mag, eine elektrische Betätigung der Feststellbremse nur noch in der Weise möglich werden zu lassen, daß der Fahrzeugführer den elektrischen Wechseltaster zur Betätigung des Elektromotors 1 ganz bewußt betätigt und festhält; das bedeutet, daß der Elektromotor 1 selbsttätig sofort in Richtung Lösen der Feststellbremse umgepolt wird, sobald der Wechseltaster wieder losgelassen wird.

Die vorbeschriebene elektromotorisch betriebene Betätigungseinrichtung für eine Kraftfahrzeug-Feststellbremse kann in konstruktiv sehr einfacher Weise so vervollständigt werden, daß sie notfalls oder nach Wahl in vertrauter Weise manuell mittels eines üblichen schwenkbaren Handbremshebels betätigt werden kann, wie dies in dem in Fig. 1 dargestellten Ausführungsbeispiel der Fall ist.

Bei dieser Anordnung ist der Handbremshebel 9 um eine im Abstand und quer zur Längserstreckung von Klinkenhebel 7 und Kraftübertragungsglied 2 und im Regelfall auch quer zur Fahrzeuglängsachse verlaufende Achse 8 schwenkbar am Fahrzeugaufbau angelenkt. Um die gleiche Achse 8 kann auch ein im Vergleich zum Handbremshebel 9 wesentlich kürzerer Betätigungshebel 10 geschwenkt werden, der mit seinem freien Ende gelenkig am motorseitigen Ende des Kraftübertragungsgliedes 2, d. h. des Seiles 21 angelenkt ist, gemeinsam mit dem Klinkenhebel 7. Handbremshebel 9 und Betätigungshebel 10 sind nicht starr miteinander verbunden, d. h. im Prinzip relativ zueinander verschwenkbar.
Am Handbremshebel 9 ist jedoch ein Mitnahmemechanismus angeordnet, nämlich ein Mitnehmer 11, welcher den in Ruhelage (in Fig. 1 voll ausgezogen) befindlichen Betätigungshebel 10 bei in seiner Ablage- bzw. Ruhelage "a" befindlichem Handbremshebel 9 lose von hinten umgreift.
Wenn der Handbremshebel zum manuellen Betätigen der Feststellbremse aus seiner Ruhelage "a" heraus in üblicher Weise angezogen, d. h. um seine Achse 8 verschwenkt wird, dann wird der Betätigungshebel 10 vom Mitnehmer 11 zwangsläufig ebenfalls um die Achse 8 verschwenkt, wodurch der Klinkenhebel 7 in Pfeilrichtung x verschoben wird; die Sperrklinke 6 des Klinkenhebels gleitet dabei über das Steilgewinde der durch Selbsthemmung stillstehenden Gewindespindel 4. Durch die sägezahnförmige Ausbildung des Steilgewindes wird in vorteilhafter Weise zum einen der Sperrklinke 6 das "Überspringen" der Steilgewindeverzahnung in Pfeilrichtung x erleichtert und zum anderen erreicht, daß von den Federvorrichtungen 14 nur geringe radiale Einrückkräfte aufgebracht werden müssen, um zu gewährleisten, daß die bei angezogener Feststellbremse entgegen Pfeilrichtung x wirksamen Haltekräfte des Kraftübertragungsgliedes 2 vom Steilgewinde 5 der Gewindespindel 4 sicher aufgenommen werden.

In Fig. 1 ist strichpunktiert jeweils die bei angezogener Feststellbremse eingenommene Lage des Handbremshebels, des Betätigungshebels sowie des Klinkenhebels angedeutet und jeweils mit 9', 10' und 7' beziffert. Wenn der Handbremshebel so weit verschwenkt ist, bis die erforderliche bzw. gewünschte Haltekraft der Feststellbremse erreicht ist, behalten der Klinkenhebel 7', der Betätigungshebel 10' und das Seil 21' aufgrund des Kraft- und Formschlusses zwischen Sperrklinke 6 und Steilgewinde 5 und aufgrund der selbsthemmenden Bemessung von Getriebe 3 und Steilgewinde etc. ihre eingenommene Lage bei. Der Handbremshebel selbst kann dabei gewünschtenfalls - da er mit dem Betätigungshebel 10 lediglich durch seinen Mitnehmer 11 gekoppelt ist - wieder in seiner Ruhelage a "abgelegt" werden. Es ist leicht erkennbar, daß der Handbremshebel 9 deshalb bei rein elektrischer Betätigung der Feststellbremse in seiner dargestellten Ruhelage a verbleibt. Der Handbremshebel wird also bei rein elektrischer Betätigung der Feststellbremse nicht etwa selbsttätig verschwenkt, was u. U. zu Irritationen des Fahrzeuglenkers führen könnte.

Zum mechanischen Lösen der Feststellbremse ist im Handbremshebel 9 ein Mechanismus, im dargestellten Ausführungsbeispiel ein durch einen Druckknopf 13 betätigbarer Seilzugmechanismus 12 vorgesehen, durch den die Sperrklinke 6 des Klinkenhebels 7 aus dem Steilgewinde 5 der Gewindespindel 4 gegen die Kraft der Federvorrichtung 14 und gegen die Wirkung der dort herrschenden Reib- bzw. Spannkräfte ausgerückt werden kann, wodurch Form- und Kraftschluß zwischen Gewindespindel 4 und Klinkenhebel 7 gelöst wird und sich Kraftübertragungsglied 2 sowie Betätigungshebel 10 und Klinkenhebel 7 unter dem Einfluß der wirksamen Seilkräfte gegen die Pfeilrichtung x in ihre Grundstellung zurückbewegen.

Das mechanische Lösen der Feststellbremse kann sowohl bei in Ruhelage "a" als auch bei in Feststellage "b" befindlichem Handbremshebel 9 bzw. 9' erfolgen. Bei in Ruhelage befindlichem Handbremshebel 9 und Mitnehmer 11 findet das Lösen der Feststellbremse sehr schnell, quasi ruckartig statt, da der Betätigungshebel nach Ausrücken der Sperrklinke 6 aus dem Steilgwinde 5 völlig unbehindert aus seiner mit 10' bezifferten Stellung in die mit 10 bezifferte Ruhestellung zurückkehren kann.

Wenn das Lösen der Feststellbremse dagegen bei angezogenem, d. h. in Position "b" befindlichem Handbremshebel 9' erfolgt, dann kann die Feststellbremse auch in gewohnter Weise langsamer und gut dosiert gelöst werden; in diesem Falle liegt nämlich der Mitnehmer 11 des Handbremshebels am ausgelenkten Betätigungshebel 10' an, so daß dieser nur in dem Maße in seine Ruhestellung zurückkehren kann, wie der Handbremshebel manuell nachgeführt wird. In diesem Falle werden zur Betätigung des Druckknopfes 13 auch niedrigere Druckkräfte benötigt, da die kraftschlüssige Verspannung zwischen Steilgewinde 5 und Sperrklinke 6 durch leichtes zusätzliches Anziehen des Handbremshebels in gewohnter Weise verringert werden kann.

## Patentansprüche

1. Betätigungseinrichtung für eine Kraftfahrzeug-Feststellbremse, enthaltend einen ein-, aus- und in seiner Laufrichtung umschaltbaren Elektromotor (1), dessen Rotationsbewegung vorzugsweise unter Zwischenschaltung eines selbsthemmend bemessenen Getriebes (3) in eine Translationsbewegung eines die Spannorgane der Feststellbremse betätigenden Kraftübertragungsgliedes (2) umgeformt wird,
gekennzeichnet durch eine vom Elektromotor (1) unmittelbar oder unter Zwischenschaltung eines Getriebes (3) angetriebene Gewindespindel (4) mit Steilgewinde (5), vorzugsweise sägezahnformigem Steilgewinde, sowie durch einen am motorseitigen Ende des Kraftübertragungsgliedes (2) gelenkig befestigten und mit einer Sperrklinke (6) in das Steilgewinde (5) der Gewindespindel (4) eingreifenden Klinkenhebel (7), wobei die Verbindung Steilgewinde (5) /Sperrklinke (6) und/oder das Getriebe (3) - sofern vorhanden - selbsthemmend bemessen sind.

2. Betätigungseinrichtung nach Anspruch 1,
dadurch gekennzeichnet, daß zum Ein- und Ausschalten sowie zur gleichzeitigen Wahl der für das Anziehen bzw. das Losen der Feststellbremse erforderlichen Laufrichtung des Elektromotors (1) ein elektrischer Wechseltaster vorgesehen ist.

3. Betätigungseinrichtung nach Anspruch 1 oder 2,
gekennzeichnet durch eine elektronische Steuer- und Regeleinrichtung zur Funktionsüberwachung und/oder zur Steuerung der Feststellbremse in Abhängigkeit von Betriebsparametern des Kraftfahrzeuges und/oder des Elektromotors (1).

4. Betätigungseinrichtung nach Anspruch 3,
gekennzeichnet durch eine elektronische Steuer- und Regeleinrichtung zum selbsttätigen Anziehen der Feststellbremse bei einem Halt am Berg.

5. Betätigungseinrichtung nach Anspruch 3,
gekennzeichnet durch eine elektronische Steuer- und Regeleinrichtung zum selbsttätigen Anziehen der Feststellbremse bei einem Fahrzeugstillstand.

6. Betätigungseinrichtung nach Anspruch 4 oder 5, für ein Kraftfahrzeug mit Automatikgetriebe,
gekennzeichnet durch eine elektronische Steuer- und Regeleinrichtung zum selbsttätigen Lösen der angezogenen Feststellbremse, sobald bei laufendem Fahrmotor eine Fahrstufe des Automatikgetriebes eingelegt und das Fahrpedal betätigt ist.

7. Betätigungseinrichtung nach Anspruch 4 oder 5, für Fahrzeuge mit manuell betätigbarem Schaltgetriebe,
gekennzeichnet durch eine elektronische Steuer- und Regeleinrichtung zum selbsttätigen Lösen der angezogenen Feststellbremse, sobald bei laufendem Fahrmotor ein Gang des Schaltgetriebes eingelegt, das Gaspedal betätigt und die Trennkupplung durch entsprechende Betätigung des Kupplungspedals um ein gewisses Maß geschlossen ist.

8. Betätigungseinrichtung nach Anspruch 3,
gekennzeichnet durch eine elektronische Steuer- und Regeleinrichtung zum selbsttätigen Lösen der angezogenen Feststellbremse, wenn eine vorgegebene Fahrgeschwindigkeit, vorzugsweise von etwa 20 km/h, überschritten und der zur Betätigung des Elektromotors (1) vorgesehene elektrische Wechseltaster nicht bewußt in seiner das Anziehen der Feststellbremse bewirkenden Position festgehalten ist.

9. Betätigungseinrichtung nach einem der Ansprüche 1 bis 8,
gekennzeichnet durch einen Handbremshebel (9), der um eine im Abstand und quer zur Längserstreckung von Klinkenhebel (7) und Kraftübertragungsglied (2) verlaufende Achse (8) schwenkbar ist,
durch einen vorzugsweise um die gleiche Achse (8) schwenkbaren wesentlich kürzeren Betätigungshebel (10), dessen freies Ende gemeinsam mit dem Klinkenhebel (7) am motorseitigen Ende des Kraftübertragungsgliedes (2) gelenkig angelenkt ist,
und durch einen den Betätigungshebel (10) lose umgreifenden, nur in einer Richtung wirksamen Mitnahmemechanismus (Mitnehmer 11) des Handbremshebels (9), durch den die und nur die in Richtung Anziehen der Feststellbremse gerichtete Schwenkbewegung des Handbremshebels (9) auf den Betätigungshebel (10) übertragbar ist.

10. Betätigungseinrichtung nach Anspruch 9,
gekennzeichnet durch einen im Handbremshebel (9) angeordneten Seilzug- oder Druckstangenmechanismus (12) zum Ausrücken der Sperrklinke (6) aus dem Steilgewinde (5).

## Claims

1. Actuating device for a motor vehicle parking brake comprising an electric motor (1) which can be switched on and off and the running direction of which can be changed and the rotational movement of the electric motor (1) can be converted preferably by interpositioning a self-locking appropriately dimensioned gear (3) into a translation motion of a force transmitting element (2) which actuates the clamping element of the parking brake, characterised by a threaded spindle (4) driven directly by the electric motor (1) or by interpositioning gear (3), which threaded spindle (4) comprises a coarse pitch (5) preferably a saw-tooth coarse pitch, as well as characterised by a ratchet lever (7) which is pivotably attached at the motor-side end of the force transmitting element (2) and which ratchet lever engages with a locking ratchet (6) into the coarse pitch (5) of the threaded spindle (4), wherein the connection of the coarse pitch (5) / locking ratchet (6) and/or the gear (3) - insofar as it is provided - is appropriately dimensioned in a self-locking manner.

2. Actuating device according to claim 1, characterised in that an electric change-over switch is provided for the purpose of switching on and off the electric motor (1) as well as for simultaneously selecting the running direction thereof necessary for activating or releasing the parking brake.

3. Actuating device according to claim 1 or 2, characterised by an electronic control and regulating device for the purpose of controlling the function and/or for controlling the parking brake in dependence upon operating parameters of the motor vehicle and/or of the electric motor (1).

4. Actuating device according to claim 3, characterised by an electronic control and regulating device for automatically activating the parking brake upon stopping on a hill.

5. Actuating device according to claim 3, characterized by an electronic control and regulating device for the purpose of automatically activating the parking brake when the vehicle is stationary.

6. Actuating device according to claim 4 or 5 for a motor vchicle having an automatic gearbox, characterised by an electronic control and regulating device for the purpose of automatically releasing the activated parking brake as soon as a driving stage of the automatic gear box is selected when the motor vehicle engine is running and the driving pedal is actuated.

7. Actuating device according to claim 4 or 5 for motor vehicles having a manually operated change speed gearbox, characterised by an electronic control and regulating device for the purpose of automatically releasing the activated parking brake as soon as a gear of the change speed gearbox is selected when the motor vehicle engine is running, the accelerator pedal is actuated and the separating coupling is closed by a certain amount by virtue of correspondingly actuating the clutch pedal.

8. Actuating device according to claim 3, characterised by an electronic control and regulating device for the purpose of automatically releasing the activated parking brake if a predetermined driving velocity, preferably of approx. 20 km/h, is exceeded and the electric change-over switch provided for the purpose of actuating the electric motor (1) is not intentionally held in its position holding the parking brake in the activated position.

9. Actuating device according to one of claims 1 to 8, characterised by a hand brake lever (9), which is pivotable about an axis (8) extending at a distance from and transverse to the longitudinal extension of the ratchet lever (7) and the force transmitting element (2), furthermore characterised by a substantially shorter actuating lever (10) which is pivotable preferably about the same axis (8) and the free end of the actuating lever (10) is connected in an articulated manner jointly to the ratchet lever (7) at the motor-side end of the force transmitting element (2) and furthermore characterised by an entraining mechanism (entrainer 11) of the hand brake lever (9), which entrainer loosely encompasses the actuating lever (10) and which entrainer is effective only in one direction and the pivot movement of the hand brake lever (9) directed in the direction of and only in the direction of activating the parking brake can be transmitted to the actuating lever (10) by virtue of the entrainer (11).

10. Actuating device according to claim 9, characterised by a cable or plunger rod mechanism (12) disposed in the hand brake lever (9) for the purpose of disengaging the locking ratchet (6) from the coarse pitch (5).

## Revendications

1. Dispositif d'actionnement d'un frein de stationnement pour véhicules automobiles, comprenant un moteur électrique (1) pouvant être mis en fonction et à l'arrêt, dont le sens de marche peut être inversé, et dont le mouvement de rotation est transformé, de préférence avec interposition d'une transmission (3) dimensionnée avec autoblocage, en un mouvement de translation d'un organe (2) de transmission de forces qui actionne les organes de serrage du frein de stationnement,
caractérisé par une broche filetée (4) entraînée par le moteur électrique (1), directement ou avec interposition d'une transmission (3), et munie d'un filetage (5) à pas rapide, de préférence un filetage à pas rapide en dents de scie, ainsi que par un levier d'encrantage (7) qui est fixé de manière articulée à l'extrémité, située côté moteur, de l'organe (2) de transmission de forces et qui vient en prise, par un cliquet de verrouillage (6), dans le filetage (5) à pas rapide de la broche filetée (4), la liaison filetage (5) à pas rapide/cliquet de verrouillage (6) et/ou la transmission (3) - si cette dernière est présente - étant dimensionnées pour produire un effet d'autoblocage.

2. Dispositif d'actionnement selon la revendication 1,
caractérisé par le fait qu'une touche électrique d'inversion est prévue pour la mise en fonction et l'arrêt, ainsi que pour choisir simultanément le sens de marche du moteur électrique (1) respectivement nécessaire au serrage ou au desserrage du frein de stationnement.

3. Dispositif d'actionnement selon la revendication 1 ou 2,
caractérisé par un dispositif électronique de commande et de régulation destiné à la surveillance fonctionnelle et/ou à la commande du frein de stationnement en fonction de paramètres de service du véhicule automobile et/ou du moteur électrique (1).

4. Dispositif d'actionnement selon la revendication 3,
caractérisé par un dispositif électronique de commande et de régulation pour serrer automatiquement le frein de stationnement lors d'un arrêt en déclivité.

5. Dispositif d'actionnement selon la revendication 3,
caractérisé par un dispositif électronique de commande et de régulation pour serrer automatiquement le frein de stationnement lors d'une immobilisation du véhicule.

6. Dispositif d'actionnement selon la revendication 4 ou 5, pour un véhicule automobile équipé d'une transmission automatique,
caractérisé par un dispositif électronique de commande et de régulation, pour le desserrage automatique du frein de stationnement serré, des qu'un cran de marche de la transmission automatique est enclenché et que la pédale d'accélération est actionnée alors que le moteur du véhicule tourne.

7. Dispositif d'actionnement selon la revendication 4 ou 5, pour des véhicules à boîte de vitesses actionnable manuellement,
caractérisé par un dispositif électronique de commande et de régulation, pour le desserrage automatique du frein de stationnement serré, des qu'un rapport de la boîte de vitesses est enclenché, que la pédale d'accélération est actionnée et que l'embrayage est engagé dans une certaine mesure, par actionnement correspondant de la pédale d'embrayage, alors que le moteur du véhicule tourne.

8. Dispositif d'actionnement selon la revendication 3,
caractérisé par un dispositif électronique de commande et de régulation, pour le desserrage automatique du frein de stationnement serré, lors du dépassement d'une vitesse de déplacement préétablie, de préférence d'environ 20 km/h, et lorsque la touche électrique d'inversion, prévue pour l'actionnement du moteur électrique (1), n'est pas bloquée délibérément dans sa position provoquant le serrage du frein de stationnement.

9. Dispositif d'actionnement selon l'une des revendications 1 à 8,
caractérisé par un levier (9) de frein à main, pouvant pivoter autour d'un axe (8) s'étendant à distance et transversalement par rapport à l'étendue longitudinale du levier d'encrantage (7) et de l'organe (2) de transmission de forces, par un levier d'actionnement (10) notablement plus court, qui peut de préférence pivoter autour du même axe (8) et dont l'extrémité libre est reliée de manière articulée, conjointement au levier d'encrantage (7), à l'extrémité de l'organe (2) de transmission de forces qui est située côté moteur, et par un mécanisme d'entraînement (organe d'entraînement 11) du levier (9) du frein à main, qui ceinture avec jeu le levier d'actionnement (10), agit efficacement dans une direction seulement, et par l'intermédiaire duquel le pivotement du levier (9) du frein à main dans le sens d'un serrage du frein de stationnement, et uniquement ce pivotement, peut être répercuté sur le levier d'actionnement (10).

10. Dispositif d'actionnement selon la revendication 9,
caractérisé par un mécanisme (12) de commande par câble ou à tige de pression, logé dans le levier (9) du frein à main pour désencliqueter le cliquet de verrouillage (6) hors du filetage (5) à pas rapide.
